(19) Europäisches Patentamt
European Patent Office
Office européen des brevets

(11) **EP 2 892 937 B1**

(12) **EUROPEAN PATENT SPECIFICATION**

(45) Date of publication and mention
of the grant of the patent:
**05.06.2019 Bulletin 2019/23**

(21) Application number: **13836044.1**

(22) Date of filing: **04.09.2013**

(51) Int Cl.:
*C08G 18/48* $^{(2006.01)}$        *C08L 75/04* $^{(2006.01)}$
*C08J 9/04* $^{(2006.01)}$

(86) International application number:
**PCT/US2013/057939**

(87) International publication number:
**WO 2014/039488 (13.03.2014 Gazette 2014/11)**

(54) **RIGID FOAMS SUITABLE FOR WALL INSULATION**

STARRE SCHAUMSTOFFE ZUR WANDISOLIERUNG

MOUSSES RIGIDES APPROPRIÉES POUR L'ISOLATION DES PAROIS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.09.2012 US 201213604747**

(43) Date of publication of application:
**15.07.2015 Bulletin 2015/29**

(73) Proprietor: **Covestro LLC**
**Pittsburgh, PA 15205 (US)**

(72) Inventors:
• **COMBS, George, G.**
**Mcmurray, PA 15317 (US)**

• **PIGOTT, Susan, C.**
**Clinton, PA 15026-0301 (US)**

(74) Representative: **Levpat**
**c/o Covestro AG**
**Gebäude 4825**
**51365 Leverkusen (DE)**

(56) References cited:
**WO-A1-2007/081903      US-A- 5 776 992**
**US-A1- 2001 036 973      US-A1- 2005 159 500**
**US-A1- 2008 275 152      US-A1- 2009 156 704**
**US-A1- 2009 247 657      US-A1- 2011 257 284**

**Description**

**FIELD OF INVENTION**

The present invention relates to flame retardant rigid polyisocyanurate foams, compositions for the production of such foams in which no halogenated flame retardant is included, and to processes for the production and use of such flame retardant polyisocyanurate foams. The foams of the present invention meet the criteria for an NFPA 101 Life Safety Code designation as Class A performance in accordance with the requirements of ASTM E-84 (American Society of Testing Materials), "Standard Test Method for Surface Burning Characteristics of Building Materials".

**BACKGROUND OF THE INVENTION**

Halogenated flame retardants are used in rigid polyurethane foam insulation to ensure compliance with various flammability test protocols required by national, state, and local building code agencies. Halogenated flame retardants provide a cost-effective, efficient means to address performance criteria that have been made more difficult by substitution of hydrocarbon blowing agents for chlorofluorocarbons (CFC's), hydrochlorofluorocarbons (HCFC's), and expensive hydrofluorocarbons (HFC's).

Prior to concerns about the ozone depletion potential or global warming potential of halogenated blowing agents that had been commonly used in rigid foam insulation materials, it was relatively easy to obtain a Class A rating in ASTM E-84, "Standard Test Method for Surface Burning Characteristics of Building Materials" by simply using a halogenated blowing agent.

Under ASTM E-84, the test material must have a flame spread index (FSI) of 25 or less and a smoke-developed index (SDI) of 450 or less to attain a NFPA 101 Life Safety Code Class A designation. To attain a NFPA 101 Life Safety Code Class B designation under ASTM E-84, the test material must have a FSI less than or equal to 75 and an SDI of 450 or less.

The NFPA 101 Life Safety Code Class designations for ASTM-84 should not, however, be confused with the Class A, B, or C designations for ASTM E-108, "Standard Test Methods for Fire Tests of Roof Coverings".

ASTM E-108 is a test designed to determine the resistance of an entire roof assembly, not just the foamed plastic, to an external fire from three perspectives - spread of flame, intermittent flame, and burning brand.

Foamed plastic insulation used in exterior wall assemblies for buildings of construction Type I, II, III, or IV of any height must pass the E-84 Tunnel test with an FSI of 25 or less and an SDI of 450 or less (in accordance with section 2603.5 of the International Building Code). These ASTM E-84, criteria meet the performance requirement for an NFPA 101 Class A designation.

The ASTM E-84 Tunnel test method provides a comparative evaluation of flame spread and smoke generation for 24 feet long by 20 inch wide samples placed horizontally in a tunnel furnace and exposed to a gas flame that provides 5000 Btu/min of heat. This method was originally developed and published by Underwriters Laboratories as UL 723 in 1950 and adopted by ASTM as a formal test method in 1961. There is a specified draft flow to move the flame front toward the end of the tunnel during the 10 minute test period and the values measured for flame spread and smoke levels are indexed to those obtained for the conditioned red oak flooring calibration standard, whose flame front reaches the end of the specimen after 5 ½ minutes. For rigid foam samples, a rapid initial spread of flame to the specimen's maximum value in the first 60 seconds followed by a recession of the flame front is often observed. Since the test method requires that the maximum distance of flame travel be used in the calculation, the flammability of gaseous blowing agents and their concentration in the foam play a significant role in rigid foam performance in this test.

Halogenated organophosphorus flame retardants in combination with halogenated blowing agents have historically been used to produce foams attaining an NFPA 101 E-84 Class A rating in this test. This Class A rating is presumably due to phosphorus acting predominantly in the condensed phase to produce a char barrier and the halogen acting as a radical scavenger in the vapor phase.

Use of more flammable hydrocarbon blowing agents has necessitated foam formulation changes. Generally, the formulation change has been an increase in the level of halogenated organophosphorus flame retardant in the rigid foam.

Recent concerns about human health effects and the environmental impact of polybrominated diphenyl ethers (PBDEs) led California to pass legislation imposing a state-wide ban on these types of brominated halogenated organophosphorus flame retardants in 2003 and prompted Great Lakes Chemical Corporation to voluntarily phase out manufacture and importation of PBDEs into the U.S. in 2004. Subsequently, all halogenated flame retardants have come under greater public scrutiny and increased regulatory pressure.

Tris (2-chloroethyl) phosphate (TCEP) is no longer produced in Europe and may soon be banned in Canada from some household products and materials based on the Canadian government's Proposed Risk Assessment Approach for TCEP published in 2009.

A European Risk Assessment for the common flame retardant tris (2-chloro-1-methylethyl) phosphate (TCPP) that was published in 2008 concluded that currently no need exists for "further information and/or testing and no need for risk reduction measures beyond those which are being applied already" with regard to human health and safety. Nonetheless, a number of studies measuring levels of halogenated organophosphorus flame retardants in consumer products and household dust have since appeared in peer-reviewed journals.

Consequently, efforts to develop rigid polyurethane foam products that are free of halogenated blowing agents and halogenated flame retardants that meet the flammability requirements for NFPA 101 Life Security Code Class A ratings in ASTM E-84 testing have increased.

In 1994, Nicola and Weber published the results of their evaluation of pentane, isopentane, and cyclopentane as blowing agents for use in the production of laminated boardstock rigid foam at the 35th Annual Polyurethane Technical/Marketing Conference in a paper entitled "Hydrocarbon Blown Foams for U.S. Construction Applications." In this study, water was used as a co-blowing agent to minimize the pentane level. Chloroalkyl phosphate esters and brominated aromatic phthalate esters were used in combination with the water/pentane blowing agent to make polyisocyanurate rigid foam at a 240 index. These foams attained a Class A rating. When the foam formulations were adjusted to a higher index with polyisocyanate, more hydrocarbon blowing agent was needed and the rigid foam no longer performed as a Class A material.

Singh et al disclose a system for the production of rigid foam that meets NFPA 101 Class A rating in accordance with ASTM E-84 in U.S. Patent 6,319,962. The Singh et al system includes an organic polyisocyanate, a polyfunctional isocyanate-reactive composition, less than about 1% by weight (based on total weight of the system) of water in combination with a hydrocarbon blowing agent, and at least one halogen-substituted phosphorus material. The halogen must be present at no more than 1.4% by weight of the total reactive system and the phosphorus is present at 0.3% to 2% by weight of the total reactive system.

Patent application U.S. 2006/100295 describes an all liquid foam-forming system for rigid polyurethane foam that includes at least one liquid isocyanate or polyisocyanate, at least one aromatic polyester polyol, at least two halogenated flame retardants and water. The foam formed from this system has a density of at least 5 pcf (80 kg/m$^3$) and an ASTM E-84 Class A rating.

U.S. Patent 4,797,428 broadly discloses that a rigid flame retardant foam having a Class A rating is formed as the reaction product of organic polyisocyanate, an isocyanate-reactive mixture composed of 25% to 75% of an oligoester that is the reaction product of a dicarboxylic acid semi-ester and and an alkylene oxide, and a blowing agent. Only halogenated compounds are disclosed as blowing agents/flame retardants in the patent and patent examples.

Not one of the above-described disclosures teaches a process or a foam-forming composition for the production of a rigid polyisocyanurate foam free of added halogens that performs as a NFPA 101 Class A foam in ASTM E-84.

U.S. Patent Application 2009/156704 discloses rigid foam compositions that include halogen-free alkyl aryl phosphate esters as flame retardants in combination with mixtures of hydrocarbon blowing agents and water. The foams produced from these compositions are classified as B2 or "normal combustibility" in accordance with DIN 4102.

To meet the criteria for B2 in DIN 4102, the average maximum flame spread of 5 specimens measuring 90 mm x 190 mm cannot exceed 150 mm during the 20 second test after exposure to a 20 mm flame from a small burner for the first 15 seconds of the test. Obviously these conditions differ markedly from those required for the ASTM E-84 Tunnel Testing described above.

There is no correlation between performance in DIN 4102 B2 and performance in ASTM E-84. No claims are made that the rigid foam systems disclosed in U.S. Patent Application 2009/156704 meet the NFPA 101 Class A E-84 standard.

U.S. Patent Application 2009/247657 describes improvement of the thermal stability of polyurethane-modified polyisocyanurate foam by combining high molecular weight ammonium polyphosphate with halogenated and non-halogenated flame retardants in the foam formulations. However, thermal stability is only determined by thermogravimetric analysis of foam samples in nitrogen, which has little bearing on performance upon exposure to a flaming ignition source such as in ASTM E-84.

U.S. Patent 5,776,992 teaches that properly blended mixtures of nitrogen-containing and nitrogen-free polyols in combination with ammonium polyphosphate can produce foams with a B2 classification in the DIN 4102 test while either polyol type used separately with the flame retardant is classified as B3. There is no teaching or suggestion that these systems meet the Class A E-84 standard.

U.S. Patent Application 2001/036973 discloses halogen-free rigid polyurethane foam compositions which are classified as B2 in accordance with DIN 4102. Foam compositions resulting in polyisocyanurate foams are not disclosed. The polyurethane foam compositions in the examples comprise a mixture of water and pentane as blowing agents are.

Consequently, a need still exits for a rigid polyisocyanurate foam system that does not include a halogenated flame retardant or a halogenated blowing agent and will pass ASTM E-84 with a NFPA 101 Class A rating.

## SUMMARY OF THE INVENTION

It is an object of the present invention to provide a foam-forming composition which when reacted forms a rigid polyisocyanurate foam having a NFPA 101 Class A rating (ASTM E-84) that does not include a halogenated flame retardant or a halogenated blowing agent.

It is also an object of the present invention to provide a process for the production of a rigid polyisocyanurate foam having a NFPA 101 Class A rating (ASTM E-84) from a foam-forming system that does not include a halogenated flame retardant or a halogenated blowing agent.

It is a further object of the present invention to provide rigid polyisocyanurate foams having a NFPA 101 Class A rating (ASTM E-84) that does not include a halogenated flame retardant or a halogenated blowing agent.

These and other objects which will be apparent to those skilled in the art are accomplished by (a) using halogen-free hydrocarbon blowing agents or mixtures thereof and limiting the amount of hydrocarbon blowing agents with Lower Explosive Limit (LEL) values less than 2% in air in the formulation and (b) using a halogen-free flame retardant. The term "halogen-free" is defined herein as the property or condition of a substance containing less than 0.3% of any halogen element such as fluorine, chlorine, bromine, or iodine.

## DETAILED DESCRIPTION OF THE INVENTION

It has unexpectedly been found that use of one or more hydrocarbon blowing agents, especially blends of less flammable hydrocarbons (i.e., hydrocarbons with LEL values greater than 2%) with more flammable hydrocarbons (i.e., hydrocarbons with LEL values less than 2%) and one or more non-halogen containing flame retardants in a foam-forming mixture is particularly advantageous because rigid polyisocyanurate foams that can withstand exposure to the 5000 Btu/min flaming heat source applied in E-84 testing to the extent that a Class A designation can be obtained. The halogen-free rigid polyisocyanurate (PIR) foams produced in accordance with the present invention can be made at lower density while still meeting the ASTM E-84 NFPA 101 Class A standard for wall insulation.

The present invention will now be described for purposes of illustration and not limitation. Except in the operating examples, or where otherwise indicated, all numbers expressing quantities, percentages, functionalities and so forth in the specification are to be understood as being modified in all instances by the term "about".

The foam-forming compositions of the present invention include:

a) at least 50% by weighty based on total weight of the foam-forming composition, of an organic polyisocyanate
b) an isocyanate-reactive composition comprising at least one polyether polyol or polyester polyol with a nominal hydroxyl functionality of at least 2.0,
c) a blowing agent composition comprising

(A) a hydrocarbon blowing agent mixture that includes:

(1) 0.25 to 2.5% by weight, based on total weight of the foam-forming composition, of one or more hydrocarbon compounds having individual LEL less than 2% by volume in air, and/or
(2) a hydrocarbon having an LEL greater than 2% by volume in air, and

(B) 0.35 to 0.7% by weight, based on total weight of the foam-forming composition, of water, and

d) at least one halogen-free flame retardant compound wherein the polyurethane foam-forming composition contains no halogenated flame retardant or halogenated blowing agent.

These compositions produce a polyisocyanurate (PIR) foam in the density range of 1.60 [25.6 kg/m$^3$] to 20 lbs/ft$^3$ [320.4 kg/m$^3$] that meets the NFPA 101 Class A ASTM E-84 standard when reacted.

The LEL for a combustible gas is defined as the lowest concentration of that gas in air by volume that will ignite or catch fire in the presence of an ignition source. Hydrocarbon gases commonly used to make PIR rigid foam insulation include n-pentane, isopentane, and cyclopentane which have LEL values of 1.5%, 1.4%, and 1.1% at 20°C and 1 atmosphere of pressure, respectively.

The LEL value for any gas or vapor can be found in the Material Safety Data Sheets from the suppliers of that material or in reference materials such as the NIOSH Pocket Guide to Chemical Hazards. The amount of these compounds used depends upon the desired foam density. Even though the blowing agent is only a small portion of the total foam-forming system, it exerts a disproportionate effect on flammability performance in tests where an ignition source is used in the presence of a controlled draft such as in the ASTM E-84 Tunnel test.

In the present invention, the amount of extremely flammable material or combination of materials with an LEL of less than 2% must be limited to 0.25% to 2.5% by weight, based on total weight of the foam-forming system. Examples of suitable hydrocarbons having an LEL of less than 2% which are suitable as blowing agents in the foam-forming reaction mixtures of the present invention include: n-pentane, isopentane, cyclopentane, butane, hexane, 2,2-dimethylbutane, 2-methylpentane, butenes, hexenes, and pentenes. The most preferred extremely flammable hydrocarbon compounds are n-pentane, isopentane, cylcopentane and mixtures thereof with LEL values less than 2%.

It is, of course, possible to use a combination of extremely flammable material(s) having an LEL of less than 2% with some amount of a slightly less flammable material having an LEL greater than 2% by volume in air. The amount of the less flammable hydrocarbon will vary depending upon the foam properties sought, e.g., density. Examples of suitable hydrocarbons having an LEL greater than 2% by volume in air include: acetone, acetaldehyde, dimethyl carbonate, dimethyl ether, methylal, ethyl formate, methyl acetate, and methyl formate. Methyl formate is most preferred.

In addition to the hydrocarbon blowing agent, some water is included in the blowing agent composition. The appropriate amount of water is determined on the basis of the desired foam density to be generated by the carbon dioxide gas co-blowing agent. The amount of water included in the foam-forming reaction mixture will generally range from 0.35% to 0.70 % by weight, based on total weight of the foam forming system.

The blowing agent composition of the present invention apparently reduces the need for highly efficient vapor phase radical scavengers so that condensed phase flame retardants free of halogen can be used to produce Class A rigid foam systems.

For higher density foams (i.e., foams having a density of at least 1.80 pounds per cubic foot (pcf)[28.8 kg/m$^3$], preferably, from 1.80 pcf [28.8 kg/m$^3$] to 20 pcf [320.4 kg/m$^3$], most preferably, from 1.85 pcf [28.8 kg/m$^3$] to 10 pcf [160.2 kg/m$^3$]) meeting the NFPA 101 Class A ASTM E-84 standard, the blowing agent composition need only include (i) from 0.35% to 0.70% by weight, based on total weight of foam-forming system, of water to produce carbon dioxide ($CO_2$) as a co-blowing agent and (ii) from 0.25% to 2.5% by weight, based on total weight of foam-forming system, of one or more hydrocarbon compounds having LEL values less than 2%.

Generally, no hydrocarbon blowing agent with an LEL greater than 2% is required to prepare foams having densities greater than about 1.85 pcf [29.6 kg/m$^3$] with a halogen-free flame retardant. However, inclusion of a hydrocarbon blowing agent with an LEL greater than 2% in minor amounts (i.e., amounts of up to 2% by weight, based on total weight of foam-forming system) is not prohibited. The optimum amount of hydrocarbon blowing agent with an LEL value of greater than 2% by volume in air to achieve a desired balance of flammability performance, thermal conductivity, compressive strength, and dimensional stability by judicious use of hydrocarbon compounds having individual LEL less than 2% by volume in air, hydrocarbon compounds having individual LEL greater than 2% by volume in air, and water can be determined by techniques well known to those skilled in the art.

For lower density foams (i.e., foams having a density of less than 1.85 pcf [29.6 kg/m$^3$], preferably from 1.60 pcf [25.6 kg/m$^3$] to 1.85 pcf [29.6 kg/m$^3$], most preferably, from 1.65 pcf [26.4 kg/m$^3$] to 1.80 pcf [28.8 kg/m$^3$]), the blowing agent composition used to produce foams in accordance with the present invention need only include (i) one or more hydrocarbon compounds having an individual LEL greater than 2% by volume in air and (ii) from 0.35% to 0.70% by weight, based on total weight of foam-forming system, of water. Although one or more hydrocarbons having an LEL value less than 2% by volume in air may be included in the blowing agent composition for lower density foams in amounts of up to 2.5% by weight and most commonly no more than 2% of hydrocarbon having an LEL value of less than 2% by volume in air is included in such blowing agent composition.

The optimum amount of hydrocarbon is dependent upon the LEL for the compound or blend. Higher LEL values allow more blowing agent to be used in rigid foam production to lower density or increase isocyanate index.

Any of the known polyfunctional isocyanates may be used in the practice of the present invention. Examples of suitable polyisocyanates include: substituted or unsubstituted aromatic, aliphatic, and cycloaliphatic polyisocyanate compounds having at least two isocyanate groups.

Polyfunctional aromatic isocyanates are particularly preferred for making rigid polyurethane foam insulation. Examples of suitable aromatic isocyanates include: 4,4'- diphenylmethane diisocyanate (MDI), polymeric MDI (PMDI), toluene diisocyanate, allophanate-modified isocyanates, isocyanate-terminated prepolymers and carbodiimide-modified isocyanates. Polymeric MDI having an average NCO functionality of from 2.2 to 3.3 and a viscosity of from 25 to 2000 mPas and prepolymers of such polymeric MDI prepared with polyols or other oligomers or polymers such as polyether or polyester polyols that contain active hydrogen atoms. The most preferred PMDI has a functionality of from 2.2 to 3.0 and a viscosity less than about 800 mPas at 25 oC. The organic polyisocyanate used in the foam-forming system of the present invention may, of course, be a mixture of such polyisocyanates.

The organic polyisocyanate(s) is/are included in the foam-forming system in an amount of at least 50%, preferably, from about 55% to about 75%, most preferably, from about 59% to about 69% by weight, based on total weight of the foam-forming system.

Any material having at least two reactive groups capable of reacting with an isocyanate group is suitable for use in the polyisocyanurate-forming reaction mixtures of the present invention. Particularly preferred isocyanate-reactive materials include polyester and polyether polyols having at least two isocyanate-reactive end groups, preferably, from 2 to 8 isocyanate-reactive end groups, most preferably, from 2 to 6 isocyanate-reactive end groups and blends thereof are particularly suitable for the practice of the present invention. Aromatic polyesters are most preferred because of their generally higher thermo-oxidative stability. Polyester or polyether polyols that contain halogenated flame retardants or additives are not suitable for use in the halogen-free reactive systems and foams of the invention. Preferred polyols for use in the present invention will generally have functionalities of from 2.0 to 8.0 and hydroxyl numbers of from about 100 mgKOH/gm to about 1000 mgKOH/gm. More preferred are aromatic polyester polyols having hydroxyl numbers from about 200 mgKOH/gm to about 500 mgKOH/gm and functionalities of from 2.0 to about 2.5. Most preferred are blends of aromatic polyester polyols and polyester or polyether polyols that contain renewable content derived from incorporation of regenerable materials such as fatty acid triglycerides, sugar, or natural glycerin.

The polyol(s) is/are generally included in the foam-forming reaction mixture in an amount of from 10% to 40%, preferably, from 20% to 40%, most preferably, from 25% to 35% by weight, based on total weight of the foam-forming mixture.

Hydrocarbon blowing agents are used in the reactive systems of the present invention. The term hydrocarbon is used herein to refer to chemical compounds composed primarily of carbon and hydrogen that may contain heteroatoms such as oxygen, nitrogen, sulfur, or other elements excluding halogens. Halogenated blowing agents are not used in the practice of the present invention. For purposes of description of the invention, extremely flammable hydrocarbon blowing agents are defined as compounds with LEL values less than 2% by volume in air and include n-pentane, isopentane, cyclopentane, butane, hexane, 2,2-dimethylbutane, 2-methylpentane, butenes, hexenes, and pentenes. The most preferred extremely flammable hydrocarbon compounds are n-pentane, isopentane, cylcopentane or mixtures thereof with LEL values less than 2% that comprise less than 2.5% based on total system weight of the total reaction system.

Slightly less flammable hydrocarbon compounds with LEL values equal to or greater than 2.0% by volume in air may be used in combination with extremely flammable blowing agents or used alone to further reduce flammability of the blowing agent mixture and/or produce rigid polyurethane materials with densities less than 1.85 lbs/ft$^3$ [29.6 kg/m$^3$]. Less flammable hydrocarbon blowing agents with LEL values greater than or equal to 2.5% such as acetone, acetaldehyde, dimethyl carbonate, dimethyl ether, methylal, ethyl formate, methyl acetate, and methyl formate are preferred in the practice of this aspect of the invention with methyl formate being most preferred as the slightly less flammable hydrocarbon blowing agent.

Water also may be used in the practice of the invention to further control product density since it reacts with isocyanates to produce carbon dioxide gas as an auxiliary blowing agent. However, the thermal conductivity of $CO_2$ is generally higher than hydrocarbon blowing agents, so the amount of water in the formulation must be controlled to prevent negative effects on the insulating ability of rigid foam produced in accordance with the present invention. Consequently, no more than 0.7% by weight of water based on total system weight is used in the reactive system.

Only halogen-free flame retardants are suitable for use in the reactive systems of the present invention. Suitable flame retardants may be nonreactive or reactive solids or liquids at normal temperatures and pressures. Halogen-free flame retardants, as that term is used herein, includes any compounds other than isocyanate-reactive materials that contain only carbon, hydrogen, oxygen and/or nitrogen that demonstrate a measurable improvement in flammability performance in ASTM E-84 when compared to the same reactive system without the flame retardant compound present. Suitable solid flame retardants include ammonium polyphosphates, melamine and its derivatives, borates, aluminum trihydrate (ATH), magnesium hydroxide, silicates, graphite, and nanoclay particles. However, liquid halogen-free flame retardants are preferred because equipment modifications are generally not required. Desirable halogen-free liquid flame retardants include halogen-free organophosphorus and silicone compounds. Suitable organophosphorus compounds include: phosphates, phosphonates, phosphites, phosphine oxides, phosphorus derivatives of iscyanate reactive materials such as diethyl N,N'-bis(2-hydroxyethyl) aminomethyl phosphonate and phosphate esters of the Exolit® OP 500 series. Triethyl phosphate, tributyl phosphate, tributoxyethyl phosphate, oligomeric ethyl ethylene phosphate, bisphenol A bis(diphenyl phosphate), resorcinol bis(diphenyl phosphate), diethyl ethyl phosphonate, and dimethyl propane phosphonate are preferred organophosphorus compounds for the practice of the present invention.

Other additives known to be useful in the production of rigid foams such as surfactants, catalysts, processing aids, chain extenders, and crosslinkers may be added to the reactive systems of the present invention. Surfactants are generally copolymers of ethylene oxide/propylene oxide with polysiloxanes that control nucleation and cell-size distribution in the rigid foam and improve mixing of the blend components. Some of the commercially available surfactants useful in the practice of the present invention include those of the Tegostab® series from Evonik such as Tegostab® 8513 and Tegostab® 8465. Amine catalysts promote reaction of active hydrogen compounds such as polyols and water with isocyanates and may, along with metal carboxylates, trimerize isocyanate groups into highly thermally stable isocyanurate linkages. Pentamethyldiethylenetriamine (PMDETA), dimethylcyclohexylamine, and tris 2,4,6-dimethylaminomethyl phenol are examples of suitable amine catalysts. Potassium octoate and acetate are examples of suitable metal carboxylate trimer catalysts.

Suitable amounts of such additives to be included in the foam-forming system of the present invention may be readily determined by those skilled in the art. Generally, the amounts in which such additives are included is determined on the basis of the desired foam properties.

Foams meeting the NFPA 101 Class A ASTM E-84 standard are produced by reacting the organic polyisocyanate and the isocyanate-reactive composition in the presence of a halogen-free hydrocarbon blowing agent and optionally, water. Any of the known techniques for producing a rigid polyisocyanurate or polyurethane foam may be used.

The foams of the present invention are characterized by an NFPA 101 Class A rating measured in accordance with ASTM E-84 standard. In addition, these foams exhibit an excellent balance of properties such as thermal conductivity, compressive strength, and dimensional stability that make them particularly useful for wall insulation applications.

Processes for producing foams from the foam-forming compositions of the present invention are known to those skilled in the art. Examples of suitable processes include: methods for producing polyisocyanurate laminated boardstock insulation, methods for producing free-rise bunstock rigid foam insulation, froth-forming method for continuously producing glass fiber reinforced insulation boards in accordance with teachings of U.S. Pat. No. 4,572,865, continuous or discontinuous methods for producing insulated metal panels, and methods for producing molded or free-rise rigid foam articles.

## EXAMPLES

The present invention is further illustrated, but is not to be limited, by the following examples in which all parts and percentages are parts by weight or percentages by weight, unless otherwise indicated.

### Hand-mix Lab Foam Preparation Procedure

All B-side components (i.e., components included in the isocyanate-reactive component) with the exception of the blowing agent were blended with a mechanical flat blade turbine mixer. Blowing agent was added to the B-side resin blend and mixed briefly before the isocyanate was added and the resultant mixture was mixed at high speed for about 5 seconds. The mixture was then poured into a 12 inch x 12 inch x 2.5 inch [30.5 cm x 30.5 cm x 6.35 cm] cardboard box and the foam was allowed to rise freely. The rising foam surface was gently probed with a wooden stick to determine string gel and tack free time. In instances where a sample was needed to perform the Bayer Mini Tunnel Test (described below), the foam mixture was poured into two 14 inch x 6 3/8 inch x 4 inch (35.6 cm x 16.2 cm x 10.2 inch) cardboard boxes so that four 12 inch x 6 7/8 inch x 1 inch (30.5 cm x 17.5 cm x 2.5 cm) samples could be cut from the foam cores.

### Bayer Alpha Mini Tunnel Test

Performance in this small scale tunnel test roughly correlates to results obtained in the Steiner Tunnel used to conduct ASTM E-84 testing. Core foam samples are cut to 6 7/8 inches (17.5 cm) x 48 inches (121.9 cm) x up to 2 inches (5.08 cm) thick. Multiple foam samples of equal length can be used for a total length of 48 inches (121.9 cm). Typically three sample sections 16 inches (40.6 cm) long are used to simulate the three 8 foot (243.8 cm) long samples in the full scale test. The sample sections are placed in the tunnel and ignited by the burner that is positioned such that the flame tip is 14 inches (35.6 cm) from the start end of the tunnel. Progression of the flame from the burning foam along the tunnel is recorded at timed intervals by an operator observing through windows installed in the tunnel "floor". The operator actually monitors the flame by looking at the flame reflection in an angled mirror positioned underneath clear window "floor" of the raised tunnel apparatus. An optical sensor in the tunnel ventilation system gathers data that is used to calculate the smoke index. The Flame Spread Constant of a 48 inch (121.9 cm) sample ($FSC_{48}$) is calculated using the following equation:

$$\frac{Average\ Distance\ -\ 14}{FSC_{48}} \approx \frac{29.9\text{-}14}{22}$$

Based on historical comparisons of results obtained for samples tested in both the Steiner Tunnel and the Bayer Alpha Mini Tunnel, a $FSC_{48}$ of 28 or less and a smoke index of 200 or less is expected to correspond to an E-84 flame spread index of 25 or less with a smoke index of 450 or less. The alpha tunnel test does not correlate well with foam samples having a flame spread index (FSI) greater than 35 in the large scale ASTM E-84 tunnel test since the flame spread of such foams usually exceeds 48 inches (121.9 cm) in the lab tunnel.

### ASTM E-84 (UL 723) Tunnel Testing

All foam samples for this test were prepared at a nominal thickness of 3.0 inches (7.6 cm) with standard black facer. The top and bottom ¼ inch (0.64 cm) of foam was slit from the boards to remove the facer. The slit samples were tested at Underwriters Laboratories Fire Protection facilities in Northbrook, IL as developmental materials.

**Pilot Line Laminator Unit**

PIR laminated boardstock foam samples were prepared on Bayer's pilot-scale Hennecke unit at the Pittsburgh, Pa. USA facility. The laminator is approximately 26 feet (7.925 m) long and equipped with a single mix-head which makes boards that are 30 inches (76.2 cm) wide. The mix-head is outfitted with a two-stream "T" made with CPVC piping. The B side resin blend (i.e., isocyanate-reactive component) is premixed with the third-streamed blowing agent inline via a special Triple Action Dispersion Device (TADD) from Komax, Inc. prior to entering the static mixer and exiting the mix-head after being subjected to impingement mixing at 1800 (12.4 MPa) to 2500 psi(17.24 MPa). The conditions used for foams made in this study were as follows:

| | |
|---|---|
| Total Feed Rate | 22 to 45 lbs/min (10 to 20.4 kg/min) |
| Resin Temperature | 82°F |
| Isocyanate Temperature | 82°F |
| Platen Temperature | 145°F |
| Line Speed | 34 to 38 ft/min (10.4 to 11.6 m/min) |

The nominal board thickness for tested foams in Table 2 was set at 3.0 inches (7.6 cm) unless otherwise noted and the foam was laminated with black facer. The board was perforated on the top surface using a weighted spiked roller as it exited the unit.

Various formulations used to prepare rigid polyurethane foams based on the inventive reactive systems are shown in Tables 1 and 2. The amounts listed in Tables 1 and 2 are parts by weight.

The materials used to produce the foams in the Examples which follow were:

| | |
|---|---|
| POLYOL: | Stepanpol® PS-2352 polyester polyol having a functionality of 2 and an OH Value of 235 which is commercially available from the Stepan Company. |
| K-15: | Potassium octoate which is commercially available under the name Dabco® K-15 from Air Products Company. |
| PMDETA: | pentamethyldiethylenetriamine available under the name Desmorapid® PV from Bayer MaterialScience. |
| TMR 30: | 2,4,6-Tris(dimethylaminomethyl) phenol which is commercially available under the name Dabco® TMR-30 from Air Products Company. |
| Polycat 8: | Dimethylcyclohexylamine which is commercially available under the name Polycat® 8 from Air Products Company. |
| Polycat 46: | Potassium acetate available under the name Polycat® 46 from Air Products Company. |
| B 8465: | Surfactant available under the name Tegostab® B 8465 from Evonik Industries. |
| B 8513: | Surfactant available under the name Tegostab® B 8513 from Evonik Industries. |
| PCF: | Halogenated flame retardant which is commercially available under the name Fyrol® PCF from ICL-Supresta. |
| TEP: | Halogen-free flame retardant triethyl phosphate commercially available from Eastman Chemical. |
| TEP-Z: | Halogen-free flame retardant commercially available under the name Levagard® TEP-Z available from Lanxess. |
| RDP: | Resorcinol bis(diphenyl phosphate), halogen-free flame retardant which commercially available under the name Fyrolflex® RDP from ICL-Supresta. |
| AP 422: | Halogen-free flame retardant which is commercially available under the name Exolit® AP 422 from Clariant. |
| PNX: | Halogen-free flame retardant which is commercially available under the name Fyrol® PNX from ICL-Supresta.. |
| n-Pentane: | The blowing agent n-pentane. |
| MF: | The blowing agent methyl formate. |
| NCO: | Polymeric MDI which is commercially available under the name Mondur® 489 from Bayer MaterialScience. |

**TABLE 1**

| Example | 1* | 2* | 3* | 4 | 5* | 6* | 7* |
|---|---|---|---|---|---|---|---|
| POLYOL | 24.17 | 26.83 | 25.87 | 28.51 | 26.67 | 27.97 | 27.64 |
| TEP | 3.66 | -- | 3.85 | -- | 4.00 | -- | -- |
| RDP | -- | 5.95 | -- | 6.13 | -- | -- | -- |
| AP 422 | -- | -- | -- | -- | -- | 2.02 | -- |
| PNX | -- | -- | -- | -- | -- | -- | 3.35 |
| B 8513 | -- | -- | 0.63 | 0.70 | 0.40 | -- | -- |
| B 8465 | 0.59 | 0.66 | -- | -- | -- | 0.69 | 0.68 |
| K-15 | 1.02 | 1.01 | 1.22 | 1.41 | 0.53 | 1.07 | 1.02 |
| Polycat 46 | 0.16 | 0.16 | 0.23 | 0.23 | -- | 0.17 | 0.16 |
| PMDETA | 0.08 | 0.08 | 0.21 | 0.11 | -- | 0.08 | 0.08 |
| TMR 30 | -- | -- | -- | -- | 0.27 | -- | -- |
| Polycat 8 | -- | -- | -- | -- | 0.53 | -- | - |
| Water | 0.48 | 0.54 | 0.31 | 0.34 | 0.67 | 0.56 | 0.55 |
| n-Pentane | 2.85 | 3.10 | 2.59 | 2.49 | 3.47 | 3.11 | 3.04 |
| MF | -- | -- | 2.09 | 2.01 | -- | -- | -- |
| NCO | 66.98 | 61.67 | 62.99 | 58.06 | 63.47 | 64.33 | 63.48 |
| Index | 3.00 | 2.50 | 3.00 | 2.52 | 2.46 | 2.50 | 2.50 |
| Density (pcf [kg/m$^3$]) | 2.11 [33.8] | 2.11 [33.8] | 1.76 [28.2] | 1.77 [28.4] | 1.85 [29.6] | 2.12 [34] | 2.09 [33.5] |
| Mini Tunnel | | | | | | | |
| FSC | 28 | 26 | 29 | 26 | 30 | 28 | 27 |
| Smoke | 114 | 122 | 73 | 82 | 120 | 150 | 126 |
| *Comparative Example | | | | | | | |

**TABLE 2**

| Example | 8 | 9 | 10 | 11 | 12* | 13* |
|---|---|---|---|---|---|---|
| POLYOL | 26.95 | 25.97 | 26.23 | 27.62 | 27.03 | 26.67 |
| PCF | -- | -- | | | -- | -- |
| TEP | 4.77 | -- | 4.79 | -- | 2.70 | 4.00 |
| RDP | -- | 7.54 | -- | 6.59 | -- | -- |
| B 8513 | -- | -- | 0.64 | | 0.41 | 0.40 |
| B 8465 | 0.66 | 0.64 | -- | 0.68 | | |
| K 15 | 0.93 | 1.03 | 1.26 | 1.38 | 0.54 | 0.53 |
| Polycat 46 | 0.15 | 0.20 | 0.24 | 0.27 | -- | -- |
| PMDETA | 0.07 | 0.16 | 0.22 | 0.23 | | -- |
| TMR 30 | -- | -- | -- | -- | 0.27 | 0.27 |
| Polycat 8 | -- | -- | -- | -- | 0.54 | 0.53 |

(continued)

| Example | 8 | 9 | 10 | 11 | 12* | 13* |
|---|---|---|---|---|---|---|
| Water | 0.54 | 0.57 | 0.52 | 0.41 | 0.68 | 0.67 |
| n-Pentane | 1.78 | 2.16 | 1,41 | : 1.89 | 3.51 | 3.47 |
| MF | -- | -- | 1.15 | 1.55 | -- | -- |
| NCO | 64.15 | 61.71 | 63.55 | 59.39 | 64.32 | 63.47 |
| Index | 2.60 | 2.50 | 2.60 | 2.50 | 2.46 | 2.46 |
| Density (pcf) [kg/m$^3$] | 2.16 [34.6] | 2.16 [34.6] | 1.82 [29.2] | 1.74 [27.8] | 1.81 [29] | 1.85 [29.6] |
| Bd. Thickness (in.) [cm] | 3.39 [8.6] | 3.41 [8.7] | 3.29 [8.4] | 3.38 [8.6] | 3.37 [8.6] | 3.37 [8.6] |
| Compressive Strength 10% Defl. (psi) [MPa] | 16.0 [0.11] | 10.9 [0.08] | 13.7 [0.09] | 15.1 [0.1] | 18.2 [0.125] | 20.10 [0.14] |
| Init. K-factor | 0.154 | 0.147 | 0.156 | 0.158 | 0.160 | 0.163 |
| Mini Tunnel | | | | | | |
| FSC | 25 | 23 | 27 | 26 | 31 | 30 |
| Smoke | 138 | 162 | 106 | 230 | 102 | 122 |
| ASTM E-84 | | | | | | |
| Thickness (in.) [cm] | 2.75 [6.9] | 2.75 [6.9] | 2.75 [6.9] | 2.75 [6.9] | 2.75 [6.9] | 2.75 [6.9] |
| FSI | 25 | 20 | 25 | 25 | 30 | 35 |
| Smoke Index | 175 | 250 | 125 | 165 | 200 | 250 |
| NFPA 101 Rating | Class A | Class A | Class A | Class A | Class B | Class B |
| *Comparative Example | | | | | | |

The foams produced in Comparative Examples 5, 12 and 13 did not meet the criteria for an NFPA 101 Class A rating in accordance with the ASTM E-84 (UL 723) standard even though 3.5% pentane was used as the blowing agent and the hand-mix produced a foam with a B2 rating in accordance with DIN 4102 Part 1.

The foregoing examples of the present invention are offered for the purpose of illustration and not limitation. It will be apparent to those skilled in the art that the embodiments described herein may be modified or revised in various ways without departing from the invention. The scope of the invention is to be measured by the appended claims.

## Claims

1.   A foam-forming composition which when reacted forms a rigid polyisocyanurate foam having a NFPA 101 Class A rating (ASTM E-84) comprising:

a) at least 50% by weight, based on total weight of the foam-forming composition, of an organic polyisocyanate,
b) an isocyanate-reactive composition comprising at least one polyether polyol or polyester polyol with a nominal hydroxyl functionality of at least 2.0,
c) a blowing agent composition comprising:

(A) a hydrocarbon blowing agent composition comprising:

(1) 0.25% to 2.5% by weight, based on total weight of the foam-forming composition, of one or more hydrocarbons having an LEL less than 2% by volume in air,

and/or
(2) a hydrocarbon having an LEL greater than 2% by volume in air,

and
(B) 0.35% to 0.7% by weight, based on total weight of foam-forming composition, of water,
and

d) at least one halogen-free flame retardant,

wherein the polyurethane foam-forming composition contains no halogenated flame retardant or halogenated blowing agent.

2. The foam-forming composition of Claim 1 in which d) is ammonium polyphosphate, melamine or a derivative thereof, a borate, aluminum trihydrate, magnesium hydroxide, a silicate, a graphite, nanoclay, triethyl phosphate, a polymerization product of triethylphosphate with ethylene oxide and phosphorus oxide, tributyl phosphate, resorcinol bis(diphenyl phosphate), bisphenol A bis(diphenyl phosphate), dimethyl propane phosphonate, dimethyl methyl phosphonate, diethyl ethyl phosphonate, diethyl N,N'-bis(2-hydroxyethyl) aminomethyl phosphonate or some combination thereof.

3. The foam-forming composition of Claim 1 in which c)(A)(1) is n-pentane, isopentane, cyclopentane, butane, hexane, 2,2-dimethylpropane, 2,2-dimethylbutane, 2-methylpentane, a butane, a hexene, a pentene or some combination thereof.

4. The foam-forming composition of Claim 1 in which c)(A)(2) is acetone, acetaldehyde, dimethyl carbonate, dimethyl ether, methylal, ethyl formate, methyl acetate, methyl formate or some combination thereof.

5. The foam-forming composition of Claim 1 in which each of c)(A)(1) and c)(A)(2) are present.

6. The foam-forming composition of Claim 1 in which b) is a polyester polyol having a hydroxyl number of from 100 mgKOH/gm to 1000 mgKOH/gm.

7. The foam-forming composition of Claim 1 in which a) is polymeric MDI.

8. A process for the production of a polyisocyanurate foam meeting NFPA 101 Class A ASTM E-84 criteria comprising reacting a polyurethane foam-forming composition comprising:

a) at least 50% by weight, based on total weight of the foam-forming composition, of an organic polyisocyanate,
b) an isocyanate-reactive composition comprising at least one polyether polyol or polyester polyol with a nominal hydroxyl functionality of at least 2.0,
c) a blowing agent composition comprising:

(A) a hydrocarbon blowing agent composition comprising:

(1) 0.25% to 2.5% by weight, based on total weight of the foam-forming composition, of one or more hydrocarbons having an LEL less than 2% by volume in air, and/or
(2) a hydrocarbon having an LEL greater than 2% by volume in air, and

(B) 0.35% to 0.7% by weight, based on total weight of foam-forming composition, of water, and

d) at least one halogen-free flame retardant,

wherein the polyurethane foam-forming composition contains no halogenated flame retardant or halogenated blowing agent.

9. The foam produced by the process of Claim 8.

10. A process according to claim 8 wherein at least one organic polyisocyanate and at least one isocyanate-reactive polyether or polyester polyol are combined under a pressure greater than 0.117N/mm$^2$ (17 psi) using a mechanical or impingement mixer to produce a halogen-free rigid polyurethane foam product.

11. Use of the polyisocyanurate foam obtained by the process according to claim 8 for wall insulation applications.

**Patentansprüche**

1. Schaumbildende Zusammensetzung, die unter Bildung eines steifen Polyisocyanuratschaums mit einer NFPA 101 Klasse A-Einstufung (ASTM E-84) reagiert, umfassend;

   a) mindestens 50 Gew.-%, bezogen auf das Gesamtgewicht der schaumbildenden Zusammensetzung, eines organischen Polyisocyanats,
   b) eine isocyanatreaktive Zusammensetzung, die mindestens ein Polyetherpolyol oder Polyesterpolyol mit einer nominalen Hydroxylfunktionalität von mindestens 2,0 umfasst,
   c) eine Treibmittelzusammensetzung, umfassend:

      (A) eine Kohlenwasserstofftreibmittelzusammensetzung, umfassend:

         (1) 0,25 Gew.-% bis 2,5 Gew.-%, bezogen auf das Gesamtgewicht der schaumbildenden Zusammensetzung, eines oder mehrerer Kohlenwasserstoffe mit einer unteren Explosionsgrenze (UEG) von unter 2 Vol.-% in Luft
         und/oder
         (2) einen Kohlenwasserstoff mit einer UEG von über 2 Vol.-% in Luft, und

      (B) 0,35 Gew.-% bis 0,7 Gew.-%, bezogen auf das Gesamtgewicht der schaumbildenden Zusammensetzung, an Wasser und

   d) mindestens ein halogenfreies Flammschutzmittel, wobei die polyurethanschaumbildende Zusammensetzung kein halogeniertes Flammschutzmittel oder halogeniertes Treibmittel enthält.

2. Schaumbildende Zusammensetzung nach Anspruch 1, wobei es sich bei d) um Ammoniumpolyphosphat, Melamin oder ein Derivat davon, ein Borat, Aluminiumtrihydrat, Magnesiumhydroxid, ein Silicat, ein Graphit, Nanoton, Triethylphosphat, ein Polymerisationsprodukt von Triethylphosphat mit Ethylenoxid und Phosphoroxid, Tributylphophshat, Resorcinolbis(diphenylphosphat), Bisphenol-A-bis(diphenylphosphat), Dimethylpropanphosphonat, Dimethylmethylphosphonat, Diethylethylphosphonat, Diethy-N,N'-bis(2-hydroxyethyl)aminomethyl-phosphonat oder eine Kombination davon handelt.

3. Schaumbildende Zusammensetzung nach Anspruch 1, wobei es sich bei c)(A)(1) um n-Pentan, Isopentan, Cyclopentan, Butan, Hexan, 2,2-Dimethylpropan, 2,2-Dimethylbutan, 2-Methylpentan, ein Butan, ein Hexen, ein Penten oder eine Kombination davon handelt.

4. Schaumbildende Zusammensetzung nach Anspruch 1, wobei es sich bei c)(A)(2) um Aceton, Acetaldehyd, Dimethylcarbonat, Dimethylether, Methylal, Ameisensäureethylester, Essigsäuremethylester, Ameisensäuremethylester oder eine Kombination davon handelt.

5. Schaumbildende Zusammensetzung nach Anspruch 1, wobei sowohl c)(A)(1) als auch c)(A)(2) vorhanden sind.

6. Schaumbildende Zusammensetzung nach Anspruch 1, wobei es sich bei b) um ein Polyesterpolyol mit einer Hydroxylzahl von 100 mg KOH/g bis 1000 mg KOH/g handelt.

7. Schaumbildende Zusammensetzung nach Anspruch 1, wobei es sich bei a) um polymeres MDI handelt.

8. Verfahren zur Herstellung eines Polyisocyanuratschaums, der die Kriterien von NFPA 101 Klasse A ASTM E-84 erfüllt, umfassend die Umsetzung einer polyurethanschaumbildenden Zusammensetzung, umfassend:

   a) mindestens 50 Gew.-%, bezogen auf das Gesamtgewicht der schaumbildenden Zusammensetzung, eines organischen Polyisocyanats,
   b) eine isocyanatreaktive Zusammensetzung, die mindestens ein Polyetherpolyol oder Polyesterpolyol mit einer nominalen Hydroxylfunktionalität von mindestens 2,0 umfasst,
c) eine Treibmittelzusammensetzung, umfassend:

(A) eine Kohlenwasserstofftreibmittelzusammensetzung, umfassend:

(1) 0,25 Gew.-% bis 2,5 Gew.-%, bezogen auf das Gesamtgewicht der schaumbildenden Zusammensetzung, eines oder mehrerer Kohlenwasserstoffe mit einer unteren Explosionsgrenze (UEG) von unter 2 Vol.-% in Luft und/oder
(2) einen Kohlenwasserstoff mit einer UEG von über 2 Vol.-% in Luft,
und

(B) 0,35 Gew.-% bis 0,7 Gew.-%, bezogen auf das Gesamtgewicht der schaumbildenden Zusammensetzung, an Wasser und

d) mindestens ein halogenfreies Flammschutzmittel, wobei die polyurethanschaumbildende Zusammensetzung kein halogeniertes Flammschutzmittel oder halogeniertes Treibmittel enthält.

9. Schaum, hergestellt durch das Verfahren nach Anspruch 8.

10. Verfahren nach Anspruch 8, bei dem man mindestens ein organisches Polyisocyanat und mindestens ein isocyanatreaktives Polyether- oder Polyesterpolyol unter einem Druck von über 0,117 N/mm$^2$ (17 psi) unter Verwendung eines mechanischen Mischers oder Prallmischers kombiniert, unter Herstellung eines halogenfreien steifen Polyurethanschaumprodukts.

11. Verwendung des durch das Verfahren gemäß Anspruch 8 erhaltenen Polyisocyanuratschaums für Wanddämmungsanwendungen.

**Revendications**

1. Composition formant une mousse qui, lorsqu'elle réagit, forme une mousse rigide de polyisocyanurate ayant une classification NFPA 101 de classe A (ASTM E-84), comprenant :

a) au moins 50 % en poids, relativement au poids total de la composition formant une mousse, d'un polyisocyanate organique,
b) une composition réagissant avec les isocyanates comprenant au moins un polyéther polyol ou polyester polyol ayant une fonctionnalité hydroxyle nominale d'au moins 2,0,
c) une composition d'agent gonflant comprenant :

(A) une composition d'agent gonflant à base d'hydrocarbures comprenant :

(1) 0,25 % à 2,5 % en poids, relativement au poids total de la composition formant une mousse, d'un ou plusieurs hydrocarbures ayant une limite
inférieure d'explosivité (LIE) inférieure à 2 % en volume dans l'air,
et/ou
(2) un hydrocarbure ayant une LIE supérieure à 2 % en volume dans l'air,
et

(B) 0,35 % à 0,7 % en poids, relativement au poids total de la composition formant une mousse, d'eau,
et

d) au moins un retardateur de flamme sans halogène,

la composition formant une mousse de polyuréthane ne contenant pas de retardateur de flamme halogéné ni d'agent gonflant halogéné.

2. Composition formant une mousse selon la revendication 1, dans laquelle d) est le polyphosphate d'ammonium, la mélamine ou un dérivé de celle-ci, un borate, le trihydrate d'aluminium, l'hydroxyde de magnésium, un silicate, un graphite, une nanoargile, le phosphate de triéthyle, un produit de polymérisation du phosphate de triéthyle avec l'oxyde d'éthylène et l'oxyde de phosphore, le phosphate de tributyle, le bis(diphénylphosphate) de résorcinol, le bis(diphénylphosphate) de bisphénol A, le phosphonate de diméthylpropane, le phosphonate de diméthylméthyle, le phosphonate de diéthyl-N,N'-bis(2-hydroxyéthyl)aminométhyle, ou une combinaison de ceux-ci.

3. Composition formant une mousse selon la revendication 1, dans laquelle c)(A)(1) est le n-pentane, l'isopentane, le cyclopentane, le butane, l'hexane, le 2,2-diméthylpropane, le 2,2-diméthylbutane, le 2-méthylpentane, un butane, un hexène, un pentène, ou une combinaison de ceux-ci.

4. Composition formant une mousse selon la revendication 1, dans laquelle c)(A)(2) est l'acétone, l'acétaldéhyde, le carbonate de diméthyle, l'éther diméthylique, le méthylal, le formiate d'éthyle, l'acétate de méthyle, le formiate de méthyle, ou une combinaison de ceux-ci .

5. Composition formant une mousse selon la revendication 1, dans laquelle chacun de c) (A) (1) et de c)(A)(2) est présent.

6. Composition formant une mousse selon la revendication 1, dans laquelle b) est un polyester polyol ayant un indice d'hydroxyle de 100 mg KOH/g à 1 000 mg KOH/g.

7. Composition formant une mousse selon la revendication 1, dans laquelle a) est un MDI polymère.

8. Procédé de fabrication d'une mousse de polyisocyanurate répondant aux critères de classification NFPA 101 de classe A selon ASTM E-84, comprenant la réaction d'une composition formant une mousse de polyuréthane comprenant :

   a) au moins 50 % en poids, relativement au poids total de la composition formant une mousse, d'un polyisocyanate organique,
   b) une composition réagissant avec les isocyanates comprenant au moins un polyéther polyol ou polyester polyol ayant une fonctionnalité hydroxyle nominale d'au moins 2,0,
   c) une composition d'agent gonflant comprenant :

      (A) une composition d'agent gonflant à base d'hydrocarbures comprenant :

         (1) 0,25 % à 2,5 % en poids, relativement au poids total de la composition formant une mousse, d'un ou plusieurs hydrocarbures ayant une limite inférieure d'explosivité (LIE) inférieure à 2 % en volume dans l'air, et/ou
         (2) un hydrocarbure ayant une LIE supérieure à 2 % en volume dans l'air, et

      (B) 0,35 % à 0,7 % en poids, relativement au poids total de la composition formant une mousse, d'eau, et

   d) au moins un retardateur de flamme sans halogène,

   la composition formant une mousse de polyuréthane ne contenant pas de retardateur de flamme halogéné ni d'agent gonflant halogéné.

9. Mousse produite par le procédé selon la revendication 8.

10. Procédé selon la revendication 8, dans lequel au moins un polyisocyanate organique et au moins un polyéther ou polyester polyol réagissant avec les isocyanates sont combinés sous une pression supérieure à 0,117 N/mm$^2$ (17 psi) à l'aide d'un mélangeur mécanique ou par impact pour produire un produit sous forme de mousse rigide de polyuréthane sans halogène.

11. Utilisation de la mousse de polyisocyanurate obtenue par le procédé selon la revendication 8 pour des applications d'isolation de parois.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6319962 B
- US 2006100295 A
- US 4797428 A
- US 2009156704 A
- US 2009247657 A
- US 5776992 A
- US 2001036973 A
- US 4572865 A